# EUROPEAN PATENT APPLICATION

(11) **EP 2 431 407 A1**
(43) Date of publication of application: **21.03.2012**
(21) Application number: 10774942.6
(22) Date of filing: 12.05.2010
(51) Int. Cl.: C08J 5/18, C08F 290/06, C08G 18/67, G02B 1/04

(54) **COMPOSITE FILM AND METHOD FOR PRODUCING SAME**

(30) Priority: 13.05.2009 JP 2009116212
(71) Applicant: Nitto Denko Corporation, Ibaraki-shi Osaka 567-8680 (JP)
(72) Inventor: IMOTO, Eiichi, Osaka (JP); NAGASAKI, Kunio, Osaka (JP); SHIMAZAKI, Yuuta, Osaka (JP)
(74) Representative: Grünecker, Kinkeldey, Stockmair & Schwanhäusser
(86) International application number: PCT/JP2010/058060
(87) International publication number: WO 2010/131685

(57) **Abstract**

The present invention is to provide a composite film having transparency, strength, elongation, and flexibility. The composite film contains: a urethane polymer formed from a polyol and a polyisocyanate; and an acrylic polymer obtained by photopolymerization of one or more (meth)acrylic monomers, in which total light transmittance of the composite film is 93.0% or more in terms of a thickness of 100 µm, breaking strength (23°C) of the composite film is 3.0 MPa or more to 75 MPa or less, breaking elongation ratio (23°C) is 150% or more to 1,000% or less, and 20% modulus (23°C) is 0.1 MPa or more to 7.5 MPa or less.

## Description

### TECHNICAL FIELD

The present invention relates to a composite film containing an acrylic polymer and a urethane polymer, particularly, relates to a composite film having transparency, strength, elongation, and flexibility and to a process for producing the same.

### BACKGROUND ART

Composite films of acrylic polymers and urethane polymers are, for example, disclosed in JP-A-2003-96140 (Patent Document 1), JP-A-2003-171411 (Patent Document 2), JP-A-2004-10661 (Patent Document 3), JP-A-2004-10662 (Patent Document 4), and the like as films capable of achieving both of high strength and high breaking elongation. The composite films have tough physical properties such as high strength and high breaking elongation as films.

As such composite films comprising acrylic polymers and urethane polymers, by changing the kinds and combinations of monomers to be used, the blend ratio thereof or the like, or by changing the production process or the like, films having various degrees of transparence (transparency) from a turbid film to a transparent film can be obtained.

In the turbid film, since the urethane polymer and the acrylic polymer are phase-separated in a domain size equal to or larger than the minimum wavelength (390 nm) of a wavelength range of light, i.e., 390 nm to 770 nm, light is scattered and thus the film is seen turbid. On the other hand, in the transparent film, since the domain size is smaller than the minimum wavelength (390 nm) of light, the film is seen transparent.

### BACK GROUND ART DOCUMENTS

### PATENT DOCUMENTS

Patent Document 1: JP-A-2003-96140
Patent Document 2: JP-A-2003-171411
Patent Document 3: JP-A-2004-10661
Patent Document 4: JP-A-2004-10662

### SUMMARY OF THE INVENTION

### PROBLEMS THAT THE INVENTION IS TO SOLVE

Since the turbid film has a large domain size of a urethane polymer phase or an acrylic polymer phase as above, tensile properties of the film depend on physical properties of either one of the urethane polymer and the acrylic polymer, so that characteristic features as a composite film are not thoroughly utilized. Therefore, in order to thoroughly utilize the properties of the composite film, the film is necessarily a transparent film.

The present invention is contrived for solving the above problem and an object of the present invention is to provide a composite film having transparency, strength, elongation, and flexibility.

### MEANS FOR SOLVING THE PROBLEMS

The composite film according to the present invention contains: a urethane polymer formed from a polyol and a polyisocyanate; and an acrylic polymer obtained by photopolymerization of one or more (meth)acrylic monomers, in which total light transmittance of the composite film is 93.0% or more in terms of a thickness of 100 µm, breaking strength (23°C) of the composite film is 3.0 MPa or more to 75 MPa or less, breaking elongation ratio (23°C) is 150% or more to 1,000% or less, and 20% modulus (23°C) is 0.1 MPa or more to 7.5 MPa or less.

In this case, the urethane polymer preferably has a structure having an acryloyl group at the molecular chain end.

In the present invention, the urethane polymer having an acryloyl group at the molecular chain end is preferably formed by adding a hydroxyl group-containing (meth)acrylate to a urethane polymer precursor where an equivalent ratio (NCO/OH) of an isocyanate group of the polyisocyanate to a hydroxyl group of the polyol is 1.1 or more to 2.0 or less so that NCO/OH (equivalent ratio) of the urethane polymer becomes 0.95 or more to 1.05 or less.

In the present invention, it is preferred that the hydroxyl group-containing (meth)acrylate is at least one compound selected from the group consisting of hydroxyethyl (meth)acrylate, hydroxypropyl (meth)acrylate, hydroxybutyl (meth)acrylate, and hydroxyhexyl (meth)acrylate.

The process for producing a composite film according to the present invention contains: forming a urethane polymer by reacting a polyol with a polyisocyanate in one or more (meth)acrylic monomers to prepare a liquid syrup of the urethane polymer and the (meth)acrylic monomers; applying the liquid syrup on a support, followed by irradiating with light to form an acrylic polymer, and thereby obtaining a composite film where total light transmittance of the film is 93.0% or more in terms of a thickness of 100 µm, breaking strength (23°C) of the film is 3.0 MPa or more to 75 MPa or less, breaking elongation ratio (23 °C) is 150% or more to 1,000% or less, and 20% modulus (23°C) is 0.1 MPa or more to 7.5 MPa or less.

In this case, the urethane polymer preferably has a structure having an acryloyl group at the molecular chain end.

In the production process according to the present invention, the urethane polymer having an acryloyl group at the molecular chain end is preferably formed by adding a hydroxyl group-containing (meth)acrylate to a urethane polymer precursor where an equivalent ratio (NCO/OH) of an isocyanate group of the polyisocyanate to a hydroxyl group of the polyol is 1.1 or more to 2.0 or less so that NCO/OH (equivalent ratio) of the urethane polymer becomes 0.95 or more to 1.05 or less.

In the production process according to the present invention, it is preferred that the hydroxyl group-containing (meth)acrylate is at least one compound selected from the group consisting of hydroxyethyl (meth)acrylate, hydroxypropyl (meth)acrylate, hydroxybutyl (meth)acrylate, and hydroxyhexyl (meth)acrylate.

### ADVANTAGE OF THE INVENTION

According to the present invention, there can be realized a composite film having transparency, strength, elongation, and flexibility.

### MODE FOR CARRYING OUT THE INVENTION

The following will explain the present invention in detail.
In the present invention, in the case of referring to a "film", the concept includes a sheet and also, in the case of referring to a "sheet", the concept includes a film.

The composite film of the present invention contains an acrylic polymer and a urethane polymer. In the composite film of the present invention, the ratio of the acrylic polymer to the urethane polymer is not particularly limited but acrylic polymer/urethane polymer (weight ratio) can be appropriately selected from a range of 90/10 to 10/90, and a range of 70/30 to 30/70 is preferred and a range of 60/40 to 40/60 is more preferred. When the acrylic polymer/urethane polymer (weight ratio) falls within the range of 90/10 to 10/90, it is a viscosity suitable for coating to a support and thus coating workability can be improved.

The acrylic polymer is obtained by photopolymerization of one or more (meth)acrylic monomers, that is, it is obtained by photopolymerization of one of or a mixture of two or more of (meth)acrylic monomers.

Examples of the (meth)acrylic monomer to be used in the present invention include: carboxyl group-containing acrylic monomers such as acrylic acid, methacrylic acid, maleic acid, and crotonic acid; (meth)acrylic monomers such as acryloylmorpholine, isobornyl acrylate, dicyclopentanyl acrylate, t-butyl acrylate, cyclohexyl acrylate, and lauryl acrylate; (meth)acrylic monomers such as n-butyl acrylate, 2-ethylhexyl acrylate, isooctyl acrylate, isobutyl acrylate, 2-methoxyethyl acrylate, tetrahydrofluorofuryl acrylate, phenoxyethyl acrylate, ethoxyethyl acrylate, and 3-methoxybutyl acrylate, and the like. They can be used alone or in combination of two or more thereof.

In the present invention, as the (meth)acrylic monomer, at least one compound of the group consisting of acryloylmorpholine, isobornyl acrylate, dicyclopentanyl acrylate, and n-butyl acrylate is preferably used. Acryloylmorpholine and/or isobornyl acrylate, acryloylmorpholine and/or dicyclopentanyl acrylate, or isobornyl acrylate and/or n-butyl acrylate are further preferably used. Particularly, isobornyl acrylate and/or n-butyl acrylate are preferably used.

The kind, combination, amount to be used, and the like of the (meth)acrylic monomer are appropriately determined in consideration of compatibility with urethane, polymerizability at photo-curing with a radiation ray or the like, and properties of a high-molecular-weight compound to be obtained.

In the present invention, as the acrylic polymer, one having a glass transition temperature (Tg) of -80°C to 180°C is suitably used. Particularly, one having Tg of -70°C to 150°C is preferred. When Tg of the acrylic polymer is -80°C to 180°C, a composite film having a breaking strength (23°C) of 3.0 MPa or more to 75 MPa or less, a breaking elongation ratio (23°C) of 150% or more to 1,000% or less, and a 20% modulus (23°C) of 0.1 MPa or more to 7.5 MPa or less can be effectively prepared.
In this case, Tg (glass transition temperature) means a value determined from the FOX's expression on the basis of Tgs of homopolymers of respective monomers constituting a monomer starting material and mass fractions (copolymerization ratios) of the monomers. As Tgs of the homopolymers, values described in "Nenchaku Gijutsu Handbook" of The Nikkan Kogyo Shinbun, Ltd. or "Polymer Handbook" of Wiley-Interscience, which are known materials, are adopted.

In the present invention, together with the above (meth)acrylic monomers, monomers such as vinyl acetate, vinyl propionate, styrene, acrylamide, methacrylamide, mono- or di-esters of maleic acid and derivatives thereof, N-methylol acrylamide, glycidyl acrylate, glycidyl methacrylate, N,N-dimethylaminoethyl acrylate, N,N-dimethylaminopropyl methacrylamide, 2-hydroxypropyl acrylate, N,N-dimethyl acrylamide, N,N-diethyl acrylamide, imide acrylate, N-vinylpyrrolidone, oligoester acrylate, ε-caprolactone acrylate, dicyclopentanyl (meth)acrylate, dicyclopentenyl (meth)acrylate, methoxylated cyclododecatriene acrylate, and methoxyethyl acrylate may be copolymerized. In this regard, the kind and amount of these monomers to be copolymerized are appropriately determined in consideration of properties of the composite film and the like.

Moreover, within a range where the properties are not impaired, another polyfunctional monomer can be added. Examples of the polyfunctional monomer include ethylene glycol di(meth)acrylate, propylene glycol di(meth)acrylate, hexanediol di(meth)acrylate, neopentyl glycol di(meth)acrylate, trimethylolpropane tri(meth)acrylate, pentaerythritol tri(meth)acrylate, dipentaerythritol hexa(meth)acrylate, urethane acrylate, epoxy acrylate, polyester acrylate, and the like. Particularly preferred is trimethylolpropane tri(meth)acrylate.

The polyfunctional monomer can be contained in an amount of 1 part by weight or more to 20 parts by weight or less based on 100 parts by weight of the (meth)acrylic monomers. When the content of the polyfunctional monomer is 1 part by weight or more, cohesive force of the composite film is sufficient. When the content is 20 parts by weight or less, elastic modulus is not exceedingly high and the film can follow unevenness of an adherend surface. Therefore, it is preferred.

The urethane polymer is obtained by reacting a polyol with a polyisocyanate such as a diisocyanate. In the reaction of the hydroxyl group of the polyol with the polyisocyanate, a catalyst can be used. Examples of the catalyst used in the present invention include dibutyltin dilaurate, tin octanoate, and the like.

Examples of the polyol for use in the present invention include: polyether polyols obtained by addition polymerization of ethylene oxide, propylene oxide, tetrahydrofuran, or the like; polyester polyols composed of polycondensates of a dihydric alcohol such as ethylene glycol, diethylene glycol, propylene glycol, butylene glycol, or hexamethylene glycol with a dibasic acid such as adipic acid, azelaic acid, or sebacic acid; acryl polyols; carbonate polyols; epoxy polyols; and caprolactone polyols. Of these, polyether polyols such as polyoxytetramethylene glycol (PTMG) and polyoxypropylene glycol (PPG), non-crystalline polyester polyols, non-crystalline polycarbonate polyols, and the like are preferably used.

Examples of the acryl polyols include copolymers of hydroxyl group-containing monomers and also copolymers of a hydroxyl group-containing compound with a (meth)acrylic monomer, and the like. Examples of the epoxy polyols include amine-modified epoxy resins and the like.

In the present invention, the above polyols can be used alone or in combination in consideration of solubility in the (meth)acrylic monomers, reactivity with the isocyanates, and the like. For example, in the case where elongation is regarded as important, it is preferred to use a polyol having a large molecular weight alone. Moreover, polyether polyols are generally inexpensive and have a good water resistance and polyester polyols have a high strength. In the present invention, depending on uses and purposes, the kind and amount of the polyols can be freely selected, and also from the viewpoint of properties of the base material and the like to be coated, reactivity with the isocyanates, compatibility with the acryls, and the like, the kind, molecular weight, and amount of the polyols can be appropriately selected.

As the polyisocyanates, aromatic, aliphatic, and alicyclic diisocyanates, dimers and trimers of these diisocyanates, and the like are mentioned. Examples of the aromatic, aliphatic, and alicyclic diisocyanates include tolylene diisocyanate, diphenylmethane diisocyanate, hexamethylene diisocyanate, xylylene diisocyanate, hydrogenated xylylene diisocyanate (HXDI), isophorone diisocyanate, hydrogenated diphenylmethane diisocyanate, 1,5-naphthylene diisocyanate, 1,3-phenylene diisocyanate, 1,4-phenylene diisocyanate, butane-1,4-diisocyanate, 2,2,4-trimethylhexamethylene diisocyanate, 2,4,4-trimethylhexamethylene diisocyanate, cyclohexane-1,4-diisocyanate, dicyclohexylmethane-4,4-diisocyanate, 1,3-bis(isocyanatomethyl)cyclohexane, methylcyclohexane diisocyanate, m-tetramethylxylylene diisocyanate, and the like. Moreover, dimes and trimers thereof and polyphenylmethane diisocyanate are used. As the trimers, isocyanurate type, biuret type, allophanate type, and the like are mentioned and can be appropriately used.

These polyisocyanates can be used alone or in combination. From the viewpoint of properties of the base material and the like on which the composite film is applied (coated or the like), solubility in the (meth)acrylic monomers, reactivity with a hydroxyl group, and the like, the kind, combination, and the like of the polyisocyanates may be appropriately selected.

In the present invention, the urethane polymer is obtained using a urethane polymer precursor and the urethane polymer precursor is obtained by reacting a polyol with a polyisocyanate. With regard to the amounts of the polyol component and the polyisocyanate component to be used for forming the urethane polymer precursor, a ratio of the isocyanate group of the polyisocyanates to the hydroxyl group of the polyols, i.e., NCO/OH (equivalent ratio) is preferably 1.1 or more to 2.0 or less, further preferably 1.15 or more to 1.8 or less, and particularly preferably 1.15 or more to 1.35 or less. When NCO/OH (equivalent ratio) is less than 1.1, the viscosity of the liquid syrup containing the urethane polymer and the (meth)acrylic monomer increases and thus stirring is prone to be difficult. Moreover, when NCO/OH (equivalent ratio) is less than 1.0, not only the viscosity of the liquid syrup increases but also the reaction with the hydroxyl group-containing (meth)acrylate cannot occur and thus the urethane polymer having an acryloyl group at the molecular chain end (acryloyl group-ended urethane polymer) cannot be formed. When NCO/OH (equivalent ratio) is more than 2.0, the elongation of the film is prone to decrease, 20% modulus is prone to increase, flexibility as the film is prone to be insufficient, and the conformability to a curved surface tends to be poor.

In the present invention, it is preferred to add at least one hydroxyl group-containing (meth)acrylate to the above urethane polymer precursor. By adding the hydroxyl group-containing (meth)acrylate to the urethane polymer precursor, a (meth)acryloyl group can be introduced to the molecular chain end of the urethane polymer, copolymerizability with an acrylic monomer is imparted, compatibility of the urethane component with the acryl component is enhanced (transparency is improved), and S-S properties such as breaking strength can be also improved. As the hydroxyl group-containing (meth)acrylate, hydroxyethyl (meth)acrylate, hydroxypropyl (meth)acrylate, hydroxybutyl (meth)acrylate, hydroxyhexyl (meth)acrylate, and the like are used. The amount of the hydroxyl group-containing (meth)acrylate to be used is suitably such an amount that the compound is added to the urethane polymer precursor having NCO/OH (equivalent ratio) of 1.1 or more to 2.0 or less so that NCO/OH (equivalent ratio) of the urethane polymer becomes 0.95 or more to 1.05 or less, preferably 0.97 or more to 1.03 or less, and particularly preferably 1.0. When the amount of the hydroxyl group-containing (meth)acrylate used is such an amount as above, the compatibility of the urethane component with the acryl component can be remarkably enhanced and transparency can be exhibited. Moreover, the reason why NCO/OH (equivalent ratio) of the urethane polymer is controlled to 0.95 to 1.05 is also so as not to remain the NCO group at the urethane polymer end. When the NCO group remains, there is a case where storability decreases, for example, the liquid syrup is gelled. Furthermore, when NCO/OH (equivalent ratio) of the urethane polymer is 0.95 to 1.05, a composite film where the breaking strength (23°C) is 3.0 MPa or more to 75 MPa or less and also the breaking elongation ratio (23°C) is 150% or more to 1,000% or less and the 20% modulus (23°C) is 0.1 MPa or more to 7.5 MPa or less can be effectively prepared.
Also, when NCO/OH (equivalent ratio) of the urethane polymer precursor is 1.1 or more to 2.0 or less, a composite film where the breaking strength (23°C) is 3.0 MPa or more to 75 MPa or less and also the breaking elongation ratio (23°C) is 150% or more to 1,000% or less and the 20% modulus (23°C) is 0.1 MPa or more to 7.5 MPa or less can be effectively prepared.

In the composite film, if necessary, additives to be usually used, for example, a UV absorbent, an antiaging agent, a filler, a pigment, a colorant, a flame retardant, an antistatic agent, and the like can be added within a range where the effects of the present invention is not inhibited. These additives are used in ordinary amounts depending on the kind thereof. These additives may be added before the polymerization reaction of the polyisocyanate with the polyol in advance or may be added before the polymerization of each of the urethane polymer and the acrylic monomer.

Moreover, in order to adjust viscosity at coating, a small amount of a solvent may be added. The solvent can be appropriately selected from solvents to be usually used but examples thereof include ethyl acetate, toluene, chloroform, dimethylformamide, and the like.

The composite film of the present invention can be, for example, obtained by: applying a coating solution for the composite film on a release treated surface of a release treated polyethylene terephthalate film, placing a transparent separator or the like thereon, irradiating with an ultraviolet ray or the like from the above to form a film, and subsequently removing the release treated polyethylene terephthalate film and the separator. In this regard, a suitable base material as a support can be used instead of the release treated polyethylene terephthalate film, or a pressure-sensitive adhesive layer may be provided on the releasable base material such as the release treated polyethylene terephthalate and the composite film may be formed thereon. Alternatively, after the composite film is formed, a pressure-sensitive adhesive layer prepared separately may be laminated to prepare a laminate sheet of pressure-sensitive adhesive layer/composite film. Such a laminate sheet of pressure-sensitive adhesive layer/composite film is suitable as a chipping sheet for protecting a body of an automobile. Alternatively, the composite film as it is can be used in such a manner that the composite film is attached on an adherend such as a painted surface of an automobile or a building on which a pressure-sensitive adhesive has been applied.

As the base material for use in the present invention, there can be used, for example, thermoplastic resins including polyester resins such as polyethylene terephthalate (PET) and polybutylene terephthalate (PBT), polyolefin resins such as polyethylene (PE), polypropylene (PP), high-density polyethylene, and biaxially oriented polypropylene, polyimides (PI), polyether ether ketones (PEEK), polyvinyl chloride (PVC), polyvinylidene chloride resins, polyamide resins, polyurethane resins, polystyrene resins, acrylic resins, fluorinated resins, cellulose resins, and polycarbonate resins; and also thermosetting resins. Of these, PET is suitable in the case of use for processing precision parts owing to adequate hardness and also is advantageous in view of abundance of product classes and the cost, so that PET is preferably used. It is preferred to determine the material of the film appropriately depending on the kind of the pressure-sensitive adhesive layer to be provided according to uses and needs. For example, in the case where an ultraviolet-curable pressure-sensitive adhesive is provided, a base material exhibiting a high ultraviolet transmittance is preferred.

In the present invention, the composite film can be, for example, formed by: forming a urethane polymer by reacting a polyol with a polyisocyanate in a (meth)acrylic monomer using the (meth)acrylic monomer as a diluent to prepare a liquid syrup (mixture) containing the (meth)acrylic monomer and the urethane polymer as main components, applying the liquid syrup on a (if necessary, release treated) base material or the like that is a support, and curing the liquid syrup through irradiation with an ionizing radiation ray such as α-ray, β-ray, γ-ray, a neutron ray, or an electron beam, a radiation ray such as a ultraviolet ray, a visible light, or the like according to the kind of a photopolymerization initiator or the like. Form the viewpoint of coating ability to the support, the liquid syrup preferably has an adequate viscosity that exhibits a good coating workability. Specifically, the viscosity of the liquid syrup can be selected from, for example, the range of 0.1 to 50 Pa·s and is preferably 1 to 20 Pa·s, further preferably 5 to 15 Pa·s. The viscosity of the liquid syrup can be measured using a BH type viscometer (manufactured by Toyo Keiki) under the following condition: a rotor of No. 5 rotor, the number of rotation of 10 rpm, and temperature of 30°C.

As a process for producing the composite film of the present invention, specifically, the composite film can be also obtained by: dissolving the polyol in the (meth)acrylic monomer, then adding the polyisocyanate or the like and reacting it with the polyol to adjust the viscosity, applying the mixture to the base material or the like, and subsequently curing it using a low-pressure mercury lamp or the like. In this process, the (meth)acrylic monomer may be added at once during the urethane synthesis or may be added several times by portions. Also, after the polyisocyanate is dissolved in the (meth)acrylic monomer, the polyol may be reacted therewith. According to the process, since the molecular weight is not limited and a high-molecular-weight polyurethane can be also formed, the molecular weight of the urethane finally obtained can be designed to be an any desired one.

On this occasion, in order to avoid polymerization inhibition by oxygen, a release treated sheet may be placed on the mixture of the urethane polymer and the (meth)acrylic monomer applied on the base material to block oxygen, or oxygen concentration may be lowered by placing the base material in a vessel filled with an inert gas.

In the present invention, the kind of the radiation ray or the like and the kind and the like of the lamp to be used for irradiation can be appropriately selected, and low-pressure lamps such as a fluorescent chemical lamp, a black light, and a bactericidal lamp, high-pressure lamps such as a metal halide lamp and a high-pressure mercury lamp, and the like can be used.

The dose of the ultraviolet ray or the like can be arbitrarily set according to the required properties of the film. In general, the dose of the ultraviolet ray is 100 to 5,000 mJ/cm², preferably 1,000 to 4,000 mJ/cm², and further preferably 2,000 to 3,000 mJ/cm². When the dose of the ultraviolet ray is less than 100 mJ/cm², a sufficient polymerization ratio may not be obtained. When the dose is more than 5,000 mJ/cm², deterioration may be caused.

Moreover, the temperature at the ultraviolet irradiation is not particularly limited and can be arbitrarily set. However, since a termination reaction caused by heat of polymerization is prone to occur and a property decrease tends to be caused when the temperature is too high, the temperature is usually 70°C or lower, preferably 50°C or lower, and further preferably 30°C or lower.

A photopolymerization initiator is contained in the mixture containing the urethane polymer and the (meth)acrylic monomer as main components. As the photopolymerization initiator, benzoin ethers such as benzoin methyl ether and benzoin isopropyl ether, substituted benzoin ethers such as anisole methyl ether, substituted acetophenones such as 2,2-diethoxyacetophenone and 2,2-dimethoxy-2-phenylacetophenone, substituted α-ketols such as 1-hydroxycyclohexyl phenyl ketone and 2-methyl-2-hydroxypropiophenone, aromatic sulfonyl chlorides such as 2-naphthalenesulfonyl chloride, and photoactive oximes such as 1-phenyl-1,1-propanedione-2-(o-ethoxycarbonyl)-oxime are preferably used.

The thickness of the composite film of the present invention can be appropriately selected according to purposes and the like. For example, in the case of the chipping uses where the film is used for protecting a body of an automobile, the thickness of the composite film is preferably about 50 to 500 µm, further preferably about 100 to 300 µm.

The composite film of the present invention has a total light transmittance of 93.0% or more, preferably 93.2% or more in terms of a thickness of 100 µm. When the total light transmittance is less than 93.0%, a sufficient transparency cannot be obtained and, for example, in the case where the film is attached to a painted surface of an automobile, togetherness with the painted film may be lacked in some cases.

The composite film of the present invention has a breaking strength at 23°C of 3.0 MPa or more to 75 MPa or less, preferably 20 MPa or more to 75 MPa or less, particularly preferably 40 MPa or more to 75 MPa or less. When the breaking strength (23°C) of the composite film is less than 3.0 MPa, strength is not sufficient as a film and when it is more than 75 MPa, the film is too hard as a film and the conformability decreases.

The composite film of the present invention has a breaking elongation ratio at 23°C of 150% or more to 1,000% or less, preferably 200% or more to 1,000% or less, particularly preferably 400% or more to 1,000% or less. When the breaking elongation ratio (23°C) of the composite film is less than 150%, the film becomes brittle and when it exceeds 1,000%, there occurs a problem that strength of the film decreases.

The composite film of the present invention has a 20% modulus at 23°C of 0.1 MPa or more to 7.5 MPa or less, preferably 0.5 MPa or more to 6.5 MPa or less, particularly preferably 0.7 MPa or more to 5.5 MPa or less. When the 20% modulus (23°C) of the composite film is less than 0.1 MPa, there is a case where the film is too soft and workability thereof decreases. When it exceeds 7.5 MPa, the film loses flexibility and a problem occurs in the conformability to a curved surface.

In the present invention, the 20% modulus (%mod) of a film means a stress necessary for stretching the film by 20%. Moreover, the breaking strength is a stress necessary for breaking the film. Specifically, a tensile force is gradually applied to the film, a force at the time when the film is broken is determined, and the breaking strength is shown as a value obtained by converting the force into a stress per unit area. Moreover, the breaking elongation ratio means a ratio of elongation (elongation ratio) until the film is broken. Specifically, it is shown as a value (unit: %) obtained by dividing an elongated length until the film is broken at the time when a tensile force is applied to the film by the original length.

The composite film of the present invention can be used as it is but can be also converted into a pressure-sensitive adhesive sheet by forming a pressure-sensitive adhesive layer on one surface or on both surfaces. The composition of the pressure-sensitive adhesive is not particularly limited and a common one such as acrylic one or rubber one can be used. A method of forming the pressure-sensitive adhesive layer is also not particularly limited and a method of applying a solvent-based or emulsion-based pressure-sensitive adhesive directly on the composite film and drying it, a method of applying the pressure-sensitive adhesive on a release paper to form a pressure-sensitive adhesive layer in advance and attaching the pressure-sensitive adhesive layer on the composite film, or the like can be adopted. A method of applying a radiation-curable pressure-sensitive adhesive on the composite film and curing the composite film and the pressure-sensitive adhesive layer simultaneously by irradiating both of the pressure-sensitive adhesive layer and the film with a radiation ray to form can be also adopted. In this case, the pressure-sensitive adhesive layer and the composite film layer can be applied so as to be a multilayer constitution.

The thickness of the pressure-sensitive adhesive layer is not particularly limited and can be arbitrarily set. However, usually, the thickness is preferably 3 to 100 µm, further preferably 10 to 50 µm, and particularly preferably about 10 to 30 µm.
In the present invention, another film can be laminated to one surface or both surfaces of the composite film. Examples of materials for forming the other film include thermoplastic resins including polyester resins such as polyethylene terephthalate (PET), polyolefin resins such as polyethylene (PE) and polypropylene (PP), polyimides (PI), polyether ether ketones (PEEK), polyvinyl chloride (PVC), polyvinylidene chloride resins, polyamide resins, polyurethane resins, polystyrene resins, acrylic resins, fluorinated resins, cellulose resins, and polycarbonate resins; and also thermosetting resins. The other film may be a single layer one or may be a film having a multilayer structure comprising a plurality of layers composed of the same material or different materials.

The composite film of the present invention is a composite film containing an acrylic polymer and a urethane polymer. The film is a transparent film and can satisfy all of high strength, high breaking elongation, and the conformability to a curved surface.

### EXAMPLES

The following will describe the present invention in detail with reference to Examples but the present invention is not limited thereto. In the following Examples, part(s) means part(s) by weight and % means % by weight unless otherwise stated.

### (Example 1)

Into a reaction vessel equipped with a cooling tube, a thermometer, and a stirring apparatus were charged 50 parts of isobornyl acrylate (IBXA) as a (meth)acrylic monomer, 36.4 parts of polyoxytetramethylene glycol (PTMG) (number-average molecular weight: 650, manufactured by Mitsubishi Chemical Corporation) as a polyol, and 0.025 parts of dibutyltin dilaurate (DBTL) as a catalyst. With stirring, 13.6 parts of hydrogenated xylylene diisocyanate (HXDI, manufactured by Mitsui Chemicals Polyurethane, Inc.) was added dropwise thereto and allowed to react at 65°C for 3 hours to form a urethane polymer having an isocyanate group at the molecular chain end (isocyanate group-ended urethane polymer). Then, 3.3 parts of 2-hydroxyethyl acrylate (HEA) was added dropwise thereto to obtain an acryloyl group-ended urethane polymer-acrylic monomer mixture. Thereafter, 0.15 parts of 2,2-dimethoxy-1,2-diphenylethane-1-one (IRGACURE 651, manufactured by Ciba Japan, Inc.) as a photopolymerization initiator was added thereto. Incidentally, with regard to the used amounts of the polyisocyanate component and the polyol component in the isocyanate group-ended urethane polymer, NCO/OH (equivalent ratio) was 1.25. Also, with regard to the used amount of HEA, it was added so that NCO/OH (equivalent ratio) of the urethane polymer became 1.0.

The resulting mixture of the urethane polymer and the (meth)acrylic monomer was applied on a release treated surface of a release treated polyethylene terephthalate film (PET film) having a thickness of 38 µm so that the thickness after curing became 100 µm. After a release treated polyethylene terephthalate (PET) film (thickness: 38 µm) was overlaid thereon as a separator to cover the applied mixture, the covered separator surface was irradiated with an ultraviolet ray (illuminance: 290 mW/cm², quantity of light: 4,600 mJ/cm²) using a metal halide lamp to achieve curing, thereby forming a composite film (fitted with the separator) on the release treated PET film.
For the resulting composite film, the total light transmittance, and the breaking strength, breaking elongation and 20% modulus at 23°C were measured and evaluated. The results are shown in Table 1.
Incidentally, for an acrylic polymer composed of 100 parts of isobornyl acrylate, glass transition temperature (Tg) determined from the FOX's expression is 94°C.

### (Example 2)

A composite film (fitted with a separator) was formed on a release treated PET film in the same manner as in Example 1 except that the kind of the (meth)acrylic monomer was changed to n-butyl acrylate (BA) in Example 1, as shown in Table 1.
For the resulting composite film, the measurements and evaluations the same as in Example 1 were performed. The results are shown in Table 1.
Incidentally, for an acrylic polymer composed of 100 parts of n-butyl acrylate, glass transition temperature (Tg) determined from the FOX's expression is -55°C.

### (Example 3)

A composite film (fitted with a separator) was formed on a release treated PET film in the same manner as in Example 1 except that the kind and used amount of the (meth)acrylic monomer were changed to 40 parts of isobornyl acrylate (IBXA) and 10 parts of n-butyl acrylate (BA) in Example 1.
For the resulting composite film, the measurements and evaluations the same as in Example 1 were performed. The results are shown in Table 1.
Incidentally, for an acrylic polymer composed of 80 parts of isobornyl acrylate and 20 parts of n-butyl acrylate, glass transition temperature (Tg) determined from the FOX's expression is 50°C.

### (Comparative Example 1)

An isocyanate group-ended urethane polymer was prepared in the same manner as in Example 1. Namely, into a reaction vessel equipped with a cooling tube, a thermometer, and a stirring apparatus were charged 50 parts of isobornyl acrylate (IBXA) as an acrylic monomer, 36.4 parts of polyoxytetramethylene glycol (PTMG) (number-average molecular weight: 650, manufactured by Mitsubishi Chemical Corporation) as a polyol, and 0.025 parts of dibutyltin dilaurate (DBTL) as a catalyst. With stirring, 13.6 parts of hydrogenated xylylene diisocyanate (HXDI, manufactured by Mitsui Chemicals Polyurethane, Inc.) was added dropwise thereto and allowed to react at 65°C for 3 hours to form an isocyanate group-ended urethane polymer. Then, 0.9 parts of methanol (MeOH) was added dropwise thereto instead of HEA used in Example 1 to obtain a methyl group-ended urethane polymer-acrylic monomer mixture. Thereafter, 0.15 5 parts of 2,2-dimethoxy-1,2-diphenylethane-1-one (IRGACURE 651, manufactured by Ciba Japan, Inc.) as a photopolymerization initiator was added thereto. Incidentally, with regard to the used amounts of the polyisocyanate component and the polyol component in the isocyanate group-ended urethane polymer, NCO/OH (equivalent ratio) was 1.25.

Then, the mixture of the urethane polymer and the acrylic monomer was applied on a release treated surface of a release treated polyethylene terephthalate film (PET film) having a thickness of 38 µm so that the thickness after curing became 100 µm. After a release treated polyethylene terephthalate (PET) film (thickness: 38 µm) was overlaid thereon as a separator to cover the applied mixture, the covered separator surface was irradiated with an ultraviolet ray (illuminance: 290 mW/cm², quantity of light: 4,600 mJ/cm²) using a metal halide lamp to achieve curing, thereby forming a composite film (fitted with the separator) on the release treated PET film.
For the resulting composite film, the total light transmittance, and the breaking strength, breaking elongation and 20% modulus at 23°C were measured. The results are shown in Table 2.

### (Comparative Example 2)

A urethane-acryl polymer film (a film corresponding to a composite film) was formed in the same manner as in Example 2 except that, after the isocyanate group-ended urethane polymer was formed in the acrylic monomer, 0.9 parts of methanol (MeOH) was added dropwise instead of 2-hydroxyethyl acrylate (HEA) in Example 2 to form a methyl group-ended urethane polymer-acrylic monomer mixture. For the resulting film, the measurements and evaluations the same as in Example 2 were performed. The results are shown in Table 2.

### (Comparative Example 3)

A urethane-acryl polymer film (a film corresponding to a composite film) was formed in the same manner as in Example 3 except that, after the isocyanate group-ended urethane polymer was formed in the acrylic monomer, 0.9 parts of methanol (MeOH) was added dropwise instead of 2-hydroxyethyl acrylate (HEA) in Example 3 to form a methyl group-ended urethane polymer-(meth)acrylic monomer mixture. For the resulting film, the measurements and evaluations the same as in Example 3 were performed. The results are shown in Table 2.

### (Evaluation methods)

### (1) Measurement and evaluation of total light transmittance

After two sheets of the release treated PET films (PET release film) were both peeled off, the total light transmittance was measured on arbitrarily selected 3 points for the composite film using a "haze meter HM-150 model" (manufactured by Murakami Color Research Laboratory, Co., Ltd.). An average value of the 3 points was taken as the total light transmittance of the film.
Incidentally, as reference data, the total light transmittance was also measured in a state that only one PET release film was peeled off (PET release film/composite film) and in a state that the PET release film was still attached on both surfaces (PET release film/composite film/PET release film).

### (2) Evaluation of mechanical properties

For the resulting composite film, 20% modulus, breaking elongation, and breaking strength were measured based on the following evaluation methods, as evaluation of mechanical properties.
Namely, after the resulting composite film was cut into a size having a width of 1 cm and a length of 13 cm, the separator and the release treated polyethylene terephthalate film were removed and a tensile test was performed at a tensile rate of 200 mm/min, a distance between chucks of 50 mm, and room temperature (23°C) using "Autograph ASG-50D Model" (manufactured by Shimadzu Corporation) as a tension tester to determine a stress-strain curve. A stress per unit area at the time when the composite film was stretched by 20% was taken as the 20% modulus.
Also, a stress at the time when the film was broken was determined and taken as the breaking strength, and a strain (elongation ratio) at the time when the film was broken was determined and taken as the breaking elongation.

**[Table 1]**

| | | Example 1 | Example 2 | Example 3 |
|---|---|---|---|---|
| Acryl component | (Meth)acrylic monomer | IBXA (50 parts) | BA (50 parts) | IBXA (40 parts) BA (10 parts) |
| Photopolymerization initiator | | Irg 651 (0.15 parts) | Irg 651 (0.15 parts) | Irg 651 (0.15 parts) |
| Urethane component | Polyol | PTMG (36.4 parts) | PTMG (36.4 parts) | PTMG (36.4 parts) |
| | Diisocyanate | HXDI (13.6 parts) | HXDI (13.6 parts) | HXDI (13.6 parts) |
| | [NCO]/[OH] | 1.25 | 1.25 | 1.25 |
| Additive after completion of urethane reaction | | HEA (3.3 parts) | HEA (3.3 parts) | HEA (3.3 parts) |
| Catalyst | | DBTL (0.025 parts) | DBTL (0.025 parts) | DBTL (0.025 parts) |
| Properties | Total light transmittance (%/100 µm) | 93.5 | 93.0 | 94.0 |
| | S-S (breaking strength) unit: MPa | 47.8 | 3.3 | 35.3 |
| | S-S (breaking elongation) unit: % | 363 | 189 | 483 |
| | S-S (20% modulus) unit: MPa | 4.9 | 0.5 | 1.9 |
| Reference data | *1 | 90.7 | 89.8 | 91.3 |
| | *2 | 88.0 | 86.7 | 88.8 |
| Remarks | | | | |

| | | | | |
|---|---|---|---|---|
| *1: Total light transmittance is measured in a state that the PET release film (38 µm) is present on one surface (unit: %/100 mm) *2: Total light transmittance is measured in a state that the PET release film (38 µm) is present on both surfaces (unit: %/100 mm) | | | | |

**[Table 2]**

| | | Comparative Example 1 | Comparative Example 2 | Comparative Example 3 |
|---|---|---|---|---|
| Acryl component | (Meth)acrylic monomer | IBXA (50 parts) | BA (50 parts) | IBXA (40 parts) BA (10 parts) |
| Photopolymerization initiator | | Irg 651 (0.15 parts) | Irg 651 (0.15 parts) | Irg 651 (0.15 parts) |
| Urethane component | Polyol | PTMG (36.4 parts) | PTMG (36.4 parts) | PTMG (36.4 parts) |
| | Diisocyanate | HXDI (13.6 parts) | HXDI (13.6 parts) | HXDI (13.6 parts) |
| | [NCO]/[OH] | 1.25 | 1.25 | 1.25 |
| Additive after completion of urethane reaction | | MeOH (0.9 parts) | MeOH (0.9 parts) | MeOH (0.9 parts) |
| Catalyst | | DBTL (0.025 parts) | DBTL (0.025 parts) | DBTL (0.025 parts) |
| Properties | Total light transmittance (%/100 µm) | 92.8 | - | - |
| | S-S (breaking strength) unit: MPa | 1.4 | - | - |
| | S-S (breaking elongation) unit: % | 67 | - | - |
| | S-S (20% modulus) unit: MPa | 0.8 | - | - |
| Reference data | *1 | 90.0 | 84.7 | 89.3 |
| | *2 | 87.5 | 81.3 | 86.6 |
| Remarks | | | No film formed | No film formed |

| | | | | |
|---|---|---|---|---|
| *1: Total light transmittance is measured in a state that the PET release film (38 µm) is present on one surface (unit: %/100 mm) *2: Total light transmittance is measured in a state that the PET release film (38 µm) is present on both surfaces (unit: %/100 mm) | | | | |

As is apparent from Table 1, the composite films of Examples 1 to 3 of the present invention exhibited a total light transmission of 93% or more in terms of a thickness of 100 µm and were found to be excellent in transparency. Therefore, they can fully utilize the properties of the composite film. The composite films of Examples 1 to 3 were found to be films having such excellent properties that the breaking strength fell within a range of 3.0 MPa to 75 MPa, the breaking elongation fell within a range of 150 to 1,000%, and the 20% modulus fell within a range of 0.1 to 7.5 MPa.

On the other hand, as is apparent from Table 2, Comparative Example 1 where the total light transmittance in terms of a thickness of 100 µm was out of the range of the present invention was poor in the breaking strength and the breaking elongation. Moreover, in Comparative Examples 2 and 3, it was impossible to form any film. Therefore, the evaluation of the physical properties as a film was impossible and thus Comparative Examples 2 and 3 were out of the question. However, for reference, when the total light transmittance was measured in a state that the PET release film was attached on one surface and in a state that the PET release film was attached on both surfaces, it was found that values lower than those in Examples 2 and 3 were shown. Namely, it was easily conceived that a total light transmission of 93% or more was not satisfied even if films were formed.

According to the present invention, it was possible to provide a composite film having transparency, strength, elongation, and flexibility at a curved surface.

The present application is based on Japanese Patent Application No. 2009-116212 filed on May 13, 2009, and the contents are incorporated herein by reference.

### INDUSTRIAL APPLICABILITY

The composite film of the present invention can be suitably used for films for which transparency, strength, elongation, and flexibility are required. For example, it can be used as films for protection and decoration of surfaces to be exposed to harmful environments such as outdoor weather, solvents, dusts, oils and fats, and marine environments. Moreover, it is also suitable as a chipping sheet for protecting bodies of automobiles.

## Claims

1. A composite film comprising: a urethane polymer formed from a polyol and a polyisocyanate; and an acrylic polymer obtained by photopolymerization of one or more (meth)acrylic monomers,
wherein total light transmittance of the composite film is 93.0% or more in terms of a thickness of 100 µm, breaking strength (23°C) of the composite film is 3.0 MPa or more to 75 MPa or less, breaking elongation ratio (23°C) is 150% or more to 1,000% or less, and 20% modulus (23°C) is 0.1 MPa or more to 7.5 MPa or less.

2. The composite film according to claim 1, wherein the urethane polymer has a structure having an acryloyl group at the molecular chain end.

3. The composite film according to claim 2, wherein the urethane polymer having an acryloyl group at the molecular chain end is formed by adding a hydroxyl group-containing (meth)acrylate to a urethane polymer precursor where an equivalent ratio (NCO/OH) of an isocyanate group of the polyisocyanate to a hydroxyl group of the polyol is 1.1 or more to 2.0 or less so that NCO/OH (equivalent ratio) of the urethane polymer becomes 0.95 or more to 1.05 or less.

4. The composite film according to claim 3, wherein the hydroxyl group-containing (meth)acrylate is at least one compound selected from the group consisting of hydroxyethyl (meth)acrylate, hydroxypropyl (meth)acrylate, hydroxybutyl (meth)acrylate, and hydroxyhexyl (meth)acrylate.

5. A process for producing a composite film comprising:
forming a urethane polymer by reacting a polyol with a polyisocyanate in one or more (meth)acrylic monomers to prepare a liquid syrup of the urethane polymer and the (meth)acrylic monomers; and
applying the liquid syrup on a support, followed by irradiating with light to form an acrylic polymer, and
thereby obtaining a composite film wherein total light transmittance of the film is 93.0% or more in terms of a thickness of 100 µm, breaking strength (23°C) of the film is 3.0 MPa or more to 75 MPa or less, breaking elongation ratio (23°C) is 150% or more to 1,000% or less, and 20% modulus (23°C) is 0.1 MPa or more to 7.5 MPa or less.

6. The process for producing a composite film according to claim 5, wherein the urethane polymer has a structure having an acryloyl group at the molecular chain end.

7. The process for producing a composite film according to claim 6, wherein the urethane polymer having an acryloyl group at the molecular chain end is formed by adding a hydroxyl group-containing (meth)acrylate to a urethane polymer precursor where an equivalent ratio (NCO/OH) of an isocyanate group of the polyisocyanate to a hydroxyl group of the polyol is 1.1 or more to 2.0 or less so that NCO/OH (equivalent ratio) of the urethane polymer becomes 0.95 or more to 1.05 or less.

8. The process for producing a composite film according to claim 7, wherein the hydroxyl group-containing (meth)acrylate is at least one compound selected from the group consisting of hydroxyethyl (meth)acrylate, hydroxypropyl (meth)acrylate, hydroxybutyl (meth)acrylate, and hydroxyhexyl (meth)acrylate.
